# FASCICULE DE BREVET EUROPEEN

(11) **EP 2 144 966 B1**
(45) Date de publication et mention de la délivrance du brevet: **09.01.2013**
(21) Numéro de dépôt: 08805782.3
(22) Date de dépôt: 14.05.2008
(51) Int. Cl.: C08L 101/16, B32B 27/36, B32B 27/06

(54) **Structure multicouche**
Mehrschichtige Struktur
Multilayer structure

(30) Priorité: 14.05.2007 FR 0755052; 24.05.2007 US 939965 P
(43) Date de publication de la demande: 20.01.2010
(73) Titulaire: ARKEMA FRANCE, 92700 Colombes (FR)
(72) Inventeur: CHOPINEZ, Fabrice, 27000 Evreux (FR); LAFFARGUE, Johann, F-27300 PLASNES (FR); PRADEL, Jean-Laurent, F-27800 Boisney (FR); RAULINE, Damien, F-27270 Saint-Quentin-des-Isles (FR); DEVISME, Samuel, F-76000 Rouen (FR)
(86) Numéro de dépôt international: PCT/FR2008/050834
(87) Numéro de publication internationale: WO 2008/149019

(56) Documents cités:
- WO-A-97/47670
- WO-A-99/06456
- WO-A-02/085421
- WO-A-2006/042364
- US-A1- 2005 215 672
- US-B1- 6 767 961
- WU C-S: "Physical properties and biodegradability of maleated-polycaprolactone /starch composite" POLYMER DEGRADATION AND STABILITY, BARKING, GB, vol. 80, no. 1, 2002, pages 127-134, XP004410430 ISSN: 0141-3910
- WU ET AL: "A new biodegradable blends prepared from polylactide and hyaluronic acid" POLYMER, ELSEVIER SCIENCE PUBLISHERS B.V, GB, vol. 46, no. 23, 14 novembre 2005 (2005-11-14), pages 10017-10026, XP005115578 ISSN: 0032-3861
- DUBOIS P ET AL: "Biodegradable compositons by reactive processing of aliphatic polyester/polysaccharide blends" MACROMOLECULAR SYMPOSIA, WILEY VCH VERLAG, WEINHEIM, DE, vol. 198, 1 janvier 2003 (2003-01-01), pages 233-243, XP003008325 ISSN: 1022-1360
- CARLSON D ET AL: "MALEATION OF POLYLACTIDE (PLA) BY REACTIVE EXTRUSION" JOURNAL OF APPLIED POLYMER SCIENCE, JOHN WILEY AND SONS INC. NEW YORK, US, vol. 72, no. 4, 25 avril 1999 (1999-04-25), pages 477-485, XP000802613 ISSN: 0021-8995
- LEE S-H; OHKITA T: "Mechanical and thermal flow properties of wood flour-biodegradable polymer composites" JOURNAL OF APPLIED POLYMER SCIENCE, vol. 90, 2003, pages 1900-1905, XP002503094

## Description

### Domaine de l'invention

L'invention concerne des liants, pouvant être utilisés en coextrusion, comprenant des polymères biorenouvelables et/ou biodégradables et présentant de bonnes propriétés d'adhérence, utiles dans des structures multicouches. Les différentes couches sont de préférence faites avec des composés ou des compositions biorenouvelables et/ou biodégradables. Ces structures multicouches sont avantageusement utiles dans le domaine de l'emballage alimentaire.

Le terme « biorenouvelable ou renouvelable » s'applique à une ressource naturelle dont le stock peut se reconstituer sur une période courte à l'échelle humaine. Dans notre cas, les matériaux sur base renouvelable correspondent à des matériaux organiques dont les carbones viennent de ressources non fossiles (Voir ASTM D 6866).

Le terme « biodégradable » s'applique à un matériau s'il est dégradé par des micro-organismes. Le résultat de cette dégradation est la formation d'eau, de CO₂ et/ou de CH₄ et, éventuellement, des sous-produits (résidus, nouvelle biomasse) non toxiques pour l'environnement.

Le marché des « polymères bio » (sur base renouvelable ou biodégradable) est en pleine expansion, notamment dans l'emballage alimentaire. Cet essor est dû à la nécessité de trouver une alternative aux matières fossiles et diminuer la pollution. La potentialité des polymères biorenouvelables et/ou biodégradables, par exemple des polylactides ou des polyhydroxyalcanoates, n'est plus à démontrer. Ces polymères présentent un impact limité sur l'environnement en comparaison avec les polymères issus de ressources fossiles non biodégradables. Les polymères biorenouvelables permettent de limiter la consommation de matières fossiles et de faire appel à des ressources issues de la culture de végétaux. Les polymères biodégradables se transforment quant à eux rapidement en des produits qui peuvent, en partie ou totalement, être absorbés par les végétaux présents dans l'environnement.

Cependant, ces polymères bio pris séparément ne peuvent généralement remplir l'ensemble du cahier des charges demandé dans l'industrie de l'emballage. En effet, dans ce secteur, les structures utilisées doivent présenter en particulier des propriétés mécaniques, des propriétés barrières à l'eau et au gaz et/ou une soudabilité suffisante.

### Etat de l'art

Pour atteindre le niveau de propriétés requises (propriétés mécaniques, des propriétés barrières à l'eau et au gaz et/ou soudabilité...), il est donc utile d'associer ces polymères bio dans des structures multicouches avec au moins une couche d'un autre matériau (biorenouvelable ou non et/ou biodégradable ou non). Ces autres matériaux étant généralement incompatibles avec les polymères bio renouvelable ou biodégradable, l'utilisation de liants peut être avantageuse.

Par exemple, le document WO 0452646 A1 revendique des structures multicouches barrières et biodégradables de type polyester biodégradable/ matériau à base d'amidon/polyester biodégradable. Bien que complètement biodégradable, les propriétés barrières à l'eau de ces structures sont limitées, ce qui empêche son utilisation pour l'emballage de nombreux aliments. Dans cette structure, aucun liant n'est utilisé ; l'adhérence entre les différentes couches est peu satisfaisante.

Par contre, dans les documents JP 2001347623 et JP 2005343098, des structures multicouches comprenant des liants sont décrites (ex : PLA/liant/EVOH/liant/PLA). Lesdits liants à base de polyoléfines (EVA, par exemple) permettent d'assurer une bonne cohésion entre la couche de PLA et la couche barrière (EVOH). Les propriétés barrières à l'eau sont satisfaisantes. Mais les liants utilisés ne sont pas issus de ressources biorenouvelables et/ou biodégradables, ce qui mène aux problèmes d'impact sur l'environnement identiques à ceux cités précédemment.

On connait également le document WO 2006/042364 qui décrit une composition en barrière comprenant, une fois séché, :
a) de 45 à 90% en poids d'un amidon et/ou un amidon modifié choisi parmi des amidons modifiés par la réaction avec un groupe alcoyle d'hydroxyle, un acétate ou un anhydride acide dicarboxylique ou un polymère greffé ;
b) de 4 à 12% en poids d'un polymère hydrosoluble choisi parmi l'alcool polyvinylique, le polyvinylacetate, et les copolymères de l'éthylène et du vinylalcool qui ont un point de fusion compatible avec l'état fondu des composants
c) de 5 à 45% en poids d'un mélange non-cristallisant de sorbitol et au moins un autre plastifiant choisi parmi le glycérol, le maltitol, le xylitol, le mannitol, le trioleate de glycérol, le lin oléagineux époxydé ou l'huile de soja, citrate tributylique, citrate triéthylique d'acétyle, triacétate glycerylique, diisobutyrate de 2.2.4 trimethyl-1,3-pentanediol ; oxyde de polyéthylène ou polyéthylène glycol ;
d) de 0.3 à 2.5% en poids d'acide gras en C₁₂₋₂₂;
e) de 0.25 à 3% en poids d'un système d'émulsifiant ayant une valeur lipophile hydrophile d'équilibre entre 2 et 10.

Il est donc nécessaire de trouver des compositions qui peuvent être utilisées comme liants dans les structures multicouches, ces compositions ayant un plus faible impact sur l'environnement que les liants actuels à base de polymères non renouvelable et non biodégradable.

### Brève description de l'invention

La demanderesse a maintenant trouvé de nouvelles compositions utiles en tant que liants de coextrusion, ayant un impact limité sur l'environnement en comparaison avec les liants fabriqués à partir de polymères issus de matières fossiles, ces compositions étant partiellement ou totalement à base de polymères biorenouvelables et/ou biodégradables .

Ainsi, la présente invention se rapporte à une structure multicouche selon les revendications 1 à 14.

Le greffage de molécules fonctionnelles sur des polymères ou sur des mélanges de polymères biorenouvelables et/ou biodégradables est décrit dans une série de brevets ou demandes de brevets de la société Kimberly&Clark (US 6552124 B2, US 6579934 B1, US 2003/0232929 A1). L'objectif principal est de renforcer le caractère hydrophile des matériaux et leur affinité, notamment vis à vis de matériaux biologiquement actifs. Les applications visées sont principalement les produits jetables absorbants.

Dans le brevet EP 1000102 B1, des compositions à base de polylactide modifiées et PVOH sont décrites pour faire des films et fibres biodégradables. Dans cette invention, le taux massique de molécules greffées doit être supérieur à 1%. Il concerne des compositions où le taux de molécules greffées est compris entre 1 et 20% en poids. Notre invention concerne un taux de greffage bien inférieur puisqu'il est < à 1% en poids.

L'utilisation de compositions comprenant des polymères biorenouvelables et/ou biodégradables modifiés par greffage comme liant n'est décrite dans aucun de ces documents. Or, de manière surprenante, la composition selon l'invention présente des propriétés d'adhérence avec de nombreux supports lorsqu'elle est comprise dans des structures multicouches.

L'invention a également pour objet un emballage comprenant cette structure multicouche.

De manière plus générale, on peut avantageusement utiliser la composition selon l'invention comme liant.

### Description détaillée de l'invention

Les polymères (A) et (B) compris dans la composition selon l'invention sont biorenouvelables et/ou biodégradables.

Pour déterminer si un polymère est biorenouvelable, on peut utiliser la norme ASTM D 6866.

Ces polymères biorenouvelables se caractérisent en ce qu'ils comprennent du carbone d'origine renouvelable, c'est-à-dire du ¹⁴C. En effet, tous les échantillons de carbone tirés d'organismes vivants et en particulier de la matière végétale utilisée pour former les polymères biorenouvelables, sont un mélange de trois isotopes : ¹²C, ¹³C et ¹⁴C dans un rapport ¹⁴C/¹²C maintenu constant par échange continu du carbone avec l'environnement et qui est égal à 1,2 x 10⁻¹². Bien que le ¹⁴C soit radioactif et que sa concentration décroisse donc au cours du temps, sa demi-vie est de 5730 ans, de sorte qu'on estime que la teneur en ¹⁴C est constante depuis l'extraction de la matière végétale jusqu'à la fabrication des polymères biorenouvelables et même jusqu'à la fin de leur utilisation. Par exemple, on peut considérer que le polymère est biorenouvelable lorsque le rapport ¹⁴C/¹²C est supérieur ou égal à 1 x 10⁻¹².

La teneur en ¹⁴C des polymères biorenouvelables peut être mesurée par exemple selon les techniques suivantes de spectrométrie à scintillation liquide ou de spectrométrie de masse. Ces méthodes de mesure de la teneur en ¹⁴C des matériaux sont décrites précisément dans les normes ASTM D 6866 (notamment D6866-06) et dans les normes ASTMD 7026 (notamment 7026-04). Ces méthodes mesurent le rapport ¹⁴C/¹²C d'un échantillon et le comparent avec le rapport ¹⁴C/¹²C d'un échantillon référence d'origine 100% renouvelable, pour donner un pourcentage relatif de carbone d'origine renouvelable dans l'échantillon.

La méthode de mesure préférentiellement utilisée dans le cas des polymères biorenouvelables est la spectrométrie de masse décrite dans la norme ASTM D6866-06 (« accelerator mass spectroscopy »).

Le terme « biodégradable » s'applique à un matériau s'il peut être dégradé par des micro-organismes. Le résultat de cette dégradation est la formation d'eau, de CO₂ et/ou de CH₄ et, éventuellement, des sous-produits (résidus, nouvelle biomasse) non toxiques pour l'environnement. On peut par exemple utiliser la norme EN13432 pour déterminer si le polymère est biodégradable.

S'agissant du polymère (A) biodégradable et/ou biorenouvelable, il peut être choisi parmi :
■ les polylactides : par exemple, les polymères et copolymères de l'acide lactique (PLA) ou encore les polymères et copolymères de l'acide glycolique (PGA),
■ les poly(hydroxyalcanoate) homo ou copolymères (PHA) : par exemple, les PHB Poly(hydroxybutyrate), PHBV (copolymere d'hydroxybutyrate-valerate, ex: poly(3-hydroxybutyrate)-poly(3-hydroxyvalerate)), PHBHx (copolymere d'hydroxybutyrate-hexanoate), PHBO (copolymere hydroxybutyrate-hexanoate),
■ les succinates de poly(alkylène) PAS : comme par exemple, le PES (succinate de poly(éthylène)), PBS (succinate de poly(butylène)),
■ d'autres polymères comme le PBSA (succinate adipate de poly(butylène)), PBAT (adipate therephtalate de poly(butylène), PCL (poly(caprolactone)), PTT (poly(triméthylène-therephtalate)) ;
■ l'amidon thermoplastique (TPS) ou des mélanges à base d'amidon.

On préfère un polymère choisi parmi les PLA, les PGA, les PHA et les PBS comme polymère (A).

Parmi les polymères biorenouvelables c'est à dire issus de ressources renouvelables, les PLA peuvent être choisis parmi les produits de la marque Natureworks® de la société Cargill, de la marque Ecoplastic® de la société Toyota, de la marque Lacea® de la société Mitsui Chemical. Toujours parmi les polymères issus de ressources renouvelables, les PHBV peuvent être choisis parmi les produits de la marque Biopol® (ex : biopol®D600G) de la société Zeneca, des produits de la société Biomer ou des produits de la société Métabolix. Le poids moléculaire des PHBVs est approximativement de 20.000 à 2.000.000 grammes par mole. Parmi les matériaux biorenouvelables à base d'amidon, on peut citer par exemple les produits vendus sous la marque Materbi® de la société Novamont, les produits vendus sous la marque BIOPAR® de la société Biopolymer Technologies.

Les amidons thermoplastiques, pouvant être utilisés dans la présente invention, sont d'origine naturelle et végétale.

Les amidons sont composés principalement d'amylose et/ou d'amylopectine se trouvant à des teneurs variables selon leur origine botanique. Ces amidons présentent habituellement 3 fonctions OH par motifs.

Selon un mode de réalisation selon l'invention, ces amidons peuvent être modifiés. Un amidon modifié est un amidon dont une des fonction OH a réagi avec une molécule modifiante. Par exemple, on peut citer comme amidon modifié l'amidon modifié par estérification (on parle alors d'esters d'amidon). Les esters d'amidon sont des amidons partiellement ou complètement modifiés par une réaction d'estérification sur les fonctions OH.

Ces amidons (modifiés ou non modifiés) peuvent être déstructurés, prégélifiés ou modifiés après adjonction d'eau et/ou de plastifiants décrits dans la demande de brevet WO-90 10 019. L'amidon est alors thermoplastique. A titre de plastifiants on peut citer, à titre non limitatif, la glycérine, la diglycérine, les polyglycérines, le sorbitol ainsi que des mélanges de ceux-ci. L'amidon thermoplastique mis en oeuvre dans la présente invention peut contenir jusqu'à 50 % en poids, et de préférence de 5 à 40 % en poids de plastifiants. On peut également citer les brevets US5095054, US5889135; US5436078 qui décrivent ces amidons thermoplastiques. Cette demande et ses brevets sont intégrés dans la présente demande par référence.

Parmi les polymères biodegradables issus de ressources fossiles, on peut citer les PBS et PBSA commercialisés sous la marque Bionole® de la société Showadenko, les PTT commercialisés sous la marque Sorona® de la société Dupont, les PBAT commercialisés sous la marque Ecoflex® de la société BASF, les PBS et PBSA commercialisés sous la marque Bionole® de la société Showadenko. On peut aussi citer les PCL commercialisées, par exemple, sous la marque Tone® (ex : Tone® UC-261, P-767 et P-787 PCL) de Dow.

S'agissant du monomère de greffage, il est choisi parmi les acides carboxyliques insaturés ou leurs dérivés fonctionnels.

Des exemples d'acides carboxyliques insaturés sont ceux ayant 2 à 20 atomes de carbone tels que les acides acryliques, méthacryliques, maléique, fumarique et itaconique. Les dérivés fonctionnels de ces acides carboxyliques insaturés comprennent les anhydrides, les dérivés esters, les dérivés amides, les dérivés imides et les sels métalliques (tels que les sels de métaux alcalins) de ces acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent, par exemple, les acides et leurs dérivés fonctionnels maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique.

Des exemples d'autres monomères de greffage comprennent des esters alkyliques en C₁-C₈ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N-monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium.

On peut également citer comme monomère de greffage l'oxazoline et le vinylsilane. On préfère l'anhydride maléique (abrégé MAH).

Divers procédés connus (procédé d'extrusion réactive, en solution, par irradiation ou à l'état solide) peuvent être utilisés pour greffer un monomère fonctionnel sur le polymère (A). A titre d'exemple, le greffage de (A) peut être réalisé à l'état fondu dans une extrudeuse en présence d'un àmorceur de radicaux. Les amorceurs de radicaux appropriés pouvant être utilisés comprennent le t-butyl-hydroperoxyde, cumène-hydroperoxyde, di-iso-propyl-benzène-hydroperoxyde, di-t-butyl-peroxyde, t-butyl-cumyl-peroxyde, dicumyl-peroxyde, 1,3-bis-(t-butylperoxy-isopropyl)benzène, acétyl-peroxyde, benzoyl-peroxyde, iso-butyryl-peroxyde, bis-3,5,5-triméthyl-hexanoyl-peroxyde et méthyl-éthyl-cétone-peroxyde.

Dans le polymère (A) modifié par greffage obtenu de la façon susmentionnée, la quantité du monomère greffé est de moins de 1 % (< 1%) en poids, de préférence entre 0,1 et 0,9% en poids et de manière encore plus préférée entre 0,2 à 0,8% en masse (0,2 et 0,8% exclus).

La quantité de monomère greffé pourra, par exemple, être aisément déterminée par l'homme du métier grâce à la technique de spectroscopie infrarouge.

S'agissant du polymère (B), c'est un polymère non greffé, biorenouvelable et/ou biodégradable, soit :
- identique au polymère (A), ledit polymère (A) étant défini plus haut ou un mélange de polymères non greffés, partiellement ou totalement biorenouvelables et/ou biodégradables et partiellement ou totalement identiques aux polymères (A), les polymères (A) étant définis plus haut ;
- différent dudit polymère (A) mais compatible avec ledit polymère (A), ou un mélange de polymères non greffés, partiellement ou totalement biorenouvelables et/ou biodégradables, différents desdits polymères (A) mais compatibles avec lesdits polymères (A), le terme « compatible » étant défini plus haut ;
- le polymère (B) étant choisi parmi les différents polymères (A) définis précédemment.

S'agissant du composant (C) assouplissant qui a pour fonction de rendre plus souple la composition, c'est un polymère, un oligomère, un prépolymère ou une molécule ayant au moins 5 atomes de carbone.

On peut citer comme assouplissant:
- les polyéthers comme le polyéthylène glycol (abrégé PEG) ou encore le polytriméthylène éther glycol (abrégé PO3G) ;
- les composés de type coeur-écorce (également appelés core-shell). Des exemples de copolymères « coeur-écorce » utilisables dans le cadre de la présente invention sont notamment décrits dans les documents US 6809151, US 7022768, US 7119152 ; On peut citer par exemple, les MBS (méthacrylate de méthyl/butadiène/styrène) vendus par Arkema sous la marque Clearstrenght® ou les MAM-Abu-MAM (acryliques modifiant choc) vendus par Arkema sous la marque Durastrenght®.
- les copolymères ou des mélanges de copolymères de l'éthylène, d'ester d'acide carboxylique insaturé ou d'ester vinylique, et éventuellement d'autres monomères fonctionnels insaturés tels que l'anhydride maléique (MAH), le méthacrylate de glycidyle (GMA), l'acide acrylique ou méthacrylique. On pourra, par exemple, utiliser les copolymères d'éthylène/acétate de vinyle (abrégé EVA), les copolymères d'éthylène/dérivés acryliques tels que l'éthylène/acrylate de méthyle (abrégé EMA), l'éthylène/acrylate de butyle (abrégé EBA), les terpolymères éthylène/acétate de vinyle/anhydride maléique (orévac T®), l'éthylène/esters acryliques /anhydride maléique (lotader®), l'éthylène/ esters acryliques /méthacrylate de glycidyl ou encore l'éthylène/ esters acryliques /acide (méth)-acrylique ;
- les copolymères ou des mélanges de copolymères de l'éthylène et d'alpha-oléfine greffés avec un monomère fonctionnel comprenant au moins une fonction réactive, les alpha-oléfines ayant 3 à 30 atomes de carbone comprenant le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène.

Par matériau (D) comprenant de l'amidon, on entend l'amidon, l'amidon modifié ou l'amidon thermoplastique décrits précédemment.

En outre, d'autres composants connus dans l'art peuvent être ajoutés aux polymères greffés de cette invention pour augmenter les propriétés du matériel final. Parmi ces composants, nous pouvons citer les additifs utilisés habituellement lors de la mise en oeuvre des polymères, par exemple à des teneurs comprises entre 10 ppm et 50 000 ppm, tels que les antioxydants, les agents de protections UV, les agents de mise en oeuvre tels que les amides grasses, l'acide stéarique et ses sels, les polymères fluorés connus comme agents pour éviter les défauts d'extrusion, les agents anti-buée, les agents anti-bloquants tels que la silice ou le talc. Des additifs d'autres types peuvent également être incorporés pour fournir les propriétés spécifiques désirées. On citera par exemple, des agents antistatiques, des agents nucléants, des colorants.

L'invention porte également sur une structure comprenant au moins une couche (L) de la composition.

Avantageusement, la couche (L) a une épaisseur comprise dans la gamme allant de 1 à 500 µm.

Selon l'invention, la structure peut comprendre différentes couches successives, dont au moins une est la couche (L) (elle est alors dite « structure multicouche »). En ce qui concerne le nombre de couches de la structure multicouche selon l'invention, c'est un nombre entier supérieur ou égal à 2, de préférence inférieur ou égal à 15, préférentiellement compris dans la gamme allant de 3 à 9.

On peut avoir une structure de type couche (L)/couche (X), couche (L)/couche (Y) voire une structure de type couche (X)/couche (L)/couche (Y) :
- la couche (L) étant la couche de liant de la présente invention,
- la couche (X), compatible avec la couche de liant (L), étant avantageusement une couche de polymère biorenouvelable et/ou biodégradable ou d'un mélange de polymères partiellement ou totalement biorenouvelables et/ou biodégradables, ledit ou lesdits polymère(s) étant choisi(s) parmi les polymères (A) énoncés plus bas. De préférence, il s'agit des polylactides : par exemple, les polymères et copolymères de l'acide lactique (PLA) ou les polymères et copolymères de l'acide glycolique (PGA),
- la couche (Y), selon un de mode de réalisation de l'invention de nature différente de la couche (X), étant avantageusement :
   (i) une couche d'un polymère biorenouvelable et/ou biodégradable ou d'un mélange de polymères partiellement ou totalement biorenouvelables et/ou biodégradables, ledit ou lesdits polymère(s) étant choisi(s) parmi les polymères (A) énoncés plus bas. De préférence, il s'agit des polylactides : par exemple, les polymères et copolymères de l'acide lactique (PLA) ou les polymères et copolymères de l'acide glycolique (PGA),
   (ii) une couche de résine polaire azotée ou oxygénée telle qu'une couche de résine choisie parmi les polyamides, les copolyamides, les copolymères saponifiés d'acétate de vinyle et d'éthylène (abrégé EVOH), les polyesters et copolyesters de nature renouvelables et/ou biodégradables ou leurs mélanges (par exemple, avec de l'amidon thermoplastique), ou encore le polystyrène,
   (iii) une couche métallique.

Dans la présente demande, les polymères sont considérés comme « compatibles » s'il existe entre eux une affinité telle qu'ils peuvent développer une excellente adhésion l'un par rapport à l'autre lorsqu'ils sont mis en contact à l'état fondu. De même, les couches contiguës d'une structure multicouche sont dites « compatibles » s'il existe entre elles une affinité telle qu'elles peuvent développer une excellente adhésion l'une par rapport à l'autre lorsqu'elles sont mises en contact direct à l'état fondu.

Par exemple, on peut considérer que deux polymères (ou deux couches contigües d'une structure multicouche) présentent une excellente adhérence (c'est à dire qu'ils sont compatibles) lorsque deux couches de 200µm d'épaisseur de chacun de ces polymères sont mises en contact à l'état fondu par coextrusion d'un film bicouche, ces 2 couches présentant, 24 h après refroidissement à 20°C, une force de pelage supérieure ou égale à 0,5 N/15mm au test de pelage à 90° selon la norme ISO8510-1, cette force de pelage étant préférentiellement supérieure ou égale à 5 N/15mm.

Les polyamides sont des polymères comprenant au moins une fonction amide dans le motif répétitif du polymère. A titre d'exemples de polyamides (PA), on peut citer le PA6, le PA6.6, le PA12 et le PA11, qui est un polyamide biorenouvelable (produit par Arkema sous la marque Rilsan®). On peut se référer à la demande de brevet et particulièrement celle déposée sous le n°PCT/FR/08/050251 qui concerne les polyamides d'origine renouvelable.

On ne sortirait pas du cadre de l'invention si, dans une structure de type couche (X)/couche (L)/couche (Y):
- la couche (X) et/ou la couche (Y) est ou sont partiellement ou totalement biorenouvelable(s) et/ou biodégradable(s) ;
- la couche (X) et/ou la couche (Y) est ou sont non biorenouvelable(s) et/ou biodégradable(s);
- la couche (X) est partiellement ou totalement biorenouvelable et/ou biodégradable et la couche (Y) est non biorenouvelable(s) et/ou biodégradable(s) ;
la couche (Y) est partiellement ou totalement biorenouvelable et/ou biodégradable et la couche (X) est non biorenouvelable(s) et/ou biodégradable(s).

De façon particulièrement avantageuse, la structure multicouche de type couche (X)/couche (L)/couche (Y) comprend :
- Une couche (X) faite de polymère ou copolymère de l'acide lactique (PLA);
- Une couche (Y) composées d'un copolymère saponifié d'acétate de vinyle et d'éthylène (abrégé EVOH) ;
- Avantageusement, la couche de liant (L) est faite avec une composition comprenant comme polymère (A) le PLA greffé MAH, comme polymère (B) le PLA non greffé et un assouplissant (C).

On entend préférentiellement par couche métallique une couche de métal, d'un alliage métallique, d'un oxyde de métal ou de métaux.

Chacune des couches non métallique de la structure peut comprendre, en outre, les composés déjà cités choisis parmi les antioxydants, les agents de protections UV, les agents de mise en oeuvre, les agents pour éviter les défauts d'extrusion, les agents anti-buée, les agents anti-bloquants, les agents antistatiques, les agents nucléants et les colorants. Ces agents peuvent être ajoutés dans chacune des couches dans les mêmes proportions massiques que celles déjà décrites pour la composition selon l'invention.

En ce qui concerne les agents anti-buée, on peut les ajouter avantageusement dans des proportions allant de 0,1 à 5% en masse de la couche les comprenant.

Préférentiellement, lorsque l'une des couches de la structure multicouche comprend des agents antibuée, il s'agit d'une couche externe. Par couche externe, on entend une couche de la structure dont au moins un côté n'est en contact avec aucune des autres couches de la structure. L'eau se condense moins sur la structure que lorsque l'une des couches n'en contient pas, ce qui permet par exemple l'utilisation avantageuse de cette structure dans le domaine des emballages. Préférentiellement, l'agent antibuée se trouve dans la couche externe de la structure qui est en contact avec l'intérieur de l'emballage.

La structure peut prendre la forme par exemple d'une feuille, d'un tube, d'un film, d'un gobelet ou d'une barquette. Préférentiellement, la structure prend la forme d'un film ou d'une feuille.

Par film, on entend une structure ayant une épaisseur inférieure ou égale à 300µm. Par feuille, on entend une structure ayant une épaisseur supérieure à 300µm et préférentiellement inférieure ou égale à 2mm.

La structure peut former, seule ou en combinaison avec une autre structure, un emballage.

Ces structures peuvent être obtenues par les techniques classiques de pressage, d'injection, d'extrusion soufflage de gaine, d'extrusion de corps creux qui permet par exemple l'obtention de bouteilles (encore appelée blow molding), d'extrusion lamination, d'extrusion couchage, d'extrusion à plat (encore appelée extrusion cast) ou encore d'extrusion de feuille par calandrage, ces feuilles pouvant être ou non thermoformées par la suite, par exemple pour former des barquettes ou des gobelets.

Toutes ces techniques sont bien connues de l'homme du métier et il saura adapter les conditions de mise en oeuvre des différentes techniques (température, vitesse de rotation des vis, etc...) pour former la structure selon l'invention ayant la forme et les épaisseurs désirées.

Préférentiellement, la structure est obtenue par un procédé de coextrusion.

Dans un procédé de fabrication préféré d'une structure selon l'invention, on réalise une étape de coextrusion des différentes couches de la structure puis on réalise une étape de pressage ou de recuit. Cette étape de recuit ou de pressage peut être réalisée par exemple à une température comprise dans la gamme allant de 100 à 200°C et préférentiellement pendant un temps compris entre 1 et 10 minutes. Dans ce cas, l'adhérence entre les différentes couches est améliorée.

La présente invention est illustrée plus en détail par l'exemple non limitatif suivant.

### Exemple 1 :

Une composition de liant a été réalisée dans une extrudeuse bivis Leistritz, comprenant :
➢ 40% en poids de PLA 2002D (vendu sous la marque Natureworks® de la société Cargill) greffé avec l'anhydride maléique, le greffage étant réalisé par extrusion réactive sur une extrudeuse bivis Leistritz (conditions : Débit = 15kg/h, Température = 200°C, vitesse de vis = 150 tr/min, peroxyde DHPB=0,8%, taux MAH introduit=0, 9%);
➢ 40% en poids de PLA 2002D ;
➢ 20% en poids de terpolymère éthylène/acrylate d'éthyle/anhydride maléique avec 28% en poids d'acrylate d'éthyle et 2% en poids de MAH, synthétisé par polymérisation radicalaire à haute pression et ayant une température de fusion (Tf) = 65°C.

Ce liant a été ensuite co-extrudée avec une couche de PLA 2002D et une couche d'EVOH (EVOH= Soarnol® 3803, 38% d'éthylène).

La structure coextrudée d'une épaisseur totale de 100 µm présente la répartition suivante : 30 µm PLA/ 10 µm Liant / 50 µm EVOH. Cette structure a été réalisée sur une extrudeuse de la marque Collin® en configuration cast film. L'extrudeuse est équipée d'un feed block (configuration 3 couches) et d'une filière plate d'entrefer 500 µm et de largeur 25cm.

Des essais de coextrusion ont été réalisés avec les paramètres suivants :
- la vitesse de la ligne est de 25 m/min
- la température de la couche de PLA est de 220°C
- la température de la couche intermédiaire de liant est de 220°C
- la température de la couche d'EVOH est de 230°C.
La force moyenne de pelage en T entre la couche de liant et celle d'EVOH est de 4,2 N (écart type de 0,2N).

## Revendications

1. Structure multicouche comprenant au moins une couche (L) d'une composition comprenant (le total faisant 100%):
- de 1 à 99 % en poids d'un polymère (A) ou d'un mélange de polymères (A) ledit ou lesdits polymères (A) étant :
• biorenouvelable(s) et/ou biodégradable(s) ; et
• greffé(s) par un monomère fonctionnel de greffage comprenant au moins une fonction réactive, le taux de greffage étant < 0,98% en poids de polymère(s) (A) greffé(s);
- de 99 à 1 % en poids d'un polymère (B) ou d'un mélange de polymères (B), ledit ou lesdits polymères (B) étant :
• non greffé(s) ;
• biorenouvelable(s) et/ou biodégradable(s) ; et
• identique(s) audit ou aux dits polymère(s)(A) ou compatible(s) avec ledit ou lesdits polymère(s) (A);
- de 0 à 50 % en poids d'un composant (C) servant à assouplir ladite composition ;
de 0 à 50 % en poids d'un matériau (D) comprenant de l'amidon.

2. Structure multicouche selon la revendication 1, **caractérisée en ce que** le taux de greffage du polymère (A) est compris entre 0,1 et 0,9% en poids de polymère (A) greffé.

3. Structure multicouche selon la revendication 1 ou 2, **caractérisée en ce que** le polymère (A) est choisi parmi les polylactides, de préférence parmi les polymères et copolymères de l'acide lactique (PLA) et les polymères et copolymères de l'acide glycolique (PGA).

4. Structure multicouche selon la revendication 1 ou 2, **caractérisée en ce que** le polymère (A) est choisi parmi les poly(hydroxyalcanoate) homo ou copolymères ou PHA, les succinates de poly(alkylène) ou PAS, le (succinate adipate de poly(butylène) ou PBSA, l' adipate théréphtalate de poly(butylène) ou PBAT, la poly(caprolactone) ou PCL, le poly(triméthylène-théréphtalate) ou PTT et l'amidon thermoplastique ou TPS.

5. Structure multicouche selon la revendication 1 ou 2, **caractérisé en ce que** le polymère (A) est choisi parmi le succinate de polyéthylène ou PES, le succinate de polybutylène ou PBS, les poly(hydroxybutyrate) ou PHB, les copolymères d'hydroxybutyrate-valerate ou PHBV tel que le poly(3-hydroxybutyrate)-poly(3-hydroxyvalerate), les copolymères d'hydroxy butyratehexanoate ou PHBHx et les copolymères hydroxybutyratehexanoate ou PHBO.

6. Structure multicouche selon l'une des revendications précédentes, **caractérisée en ce que** le monomère fonctionnel de greffage est choisi parmi les acides carboxyliques insaturés ou leurs dérivés fonctionnels.

7. Structure multicouche selon la revendication 6, **caractérisée en ce que** le monomère fonctionnel de greffage est choisi parmi (i) les acides acryliques, méthacryliques, maléique, fumarique et itaconique et (ii) les anhydrides, les dérivés esters, les dérivés amides, les dérivés imides et les sels métalliques desdits acides.

8. Structure multicouche selon la revendication 7, **caractérisée en ce que** le monomère fonctionnel de greffage est l'anhydride maléique.

9. Structure multicouche selon l'une des revendications précédentes, **caractérisée en ce que** le polymère (B) est choisi parmi les polylactides, de préférence parmi les polymères et copolymères de l'acide lactique (PLA) et les polymères et copolymères de l'acide glycolique (PGA).

10. Structure multicouche selon la revendication 9, **caractérisée en ce que** le composant (C) est choisi parmi :
• les polyéthers, avantageusement le polyéthylène glycol (abrégé PEG) ou le polytriméthylène éther glycol (abrégé PO3G) ;
• les composés de type coeur-écorce ;
• les copolymères ou des mélanges de copolymères de l'ethylène, d'ester acide carboxylique insaturé, et éventuellement d'autres monomères fonctionnels insaturés tels que l'anhydride maléique (MAH), le méthacrylate de glycidyle (GMA), l'acide (meth)acrylique) ;
• les copolymères ou des mélanges de copolymères de l'éthylène et d'alpha-oléfine greffés avec un monomère fonctionnel comprenant au moins une fonction réactive, les alpha-oléfines ayant 3 à 30 atomes de carbone.

11. Structure multicouche selon l'une des revendications précédentes, **caractérisée en ce qu'**elle comprend de l'amidon thermoplastique comme matériau (D).

12. Structure multicouche selon l'une quelconque des revendications précédentes, **caractérisée en ce que** la couche (L) directement liée à une couche (X) est également directement liée à une couche (Y) et formant une structure de type couche (X)/couche (L)/couche (Y) avec :
• soit la couche (X) et/ou la couche (Y) étant partiellement ou totalement biorenouvelable(s) et/ou biodégradable(s) ;
• soit la couche (X) et/ou la couche (Y) étant non biorenouvelable(s) et/ou biodégradable(s) (par exemple, une couche de Polyéthylène) ;
• soit la couche (X) étant partiellement ou totalement biorenouvelable et/ou biodégradable et la couche (Y) étant non biorenouvelable(s) et/ou biodégradable(s) ;
• soit la couche (Y) étant partiellement ou totalement biorenouvelable et/ou biodégradable et la couche (X) étant non biorenouvelable(s) et/ou biodégradable(s) .

13. Structure multicouche selon la revendication 12, la couche (Y), de nature différente de la couche (X), étant avantageusement (i) une couche d'un polymère biorenouvelable et/ou biodégradable ou d'un mélange de polymères partiellement ou totalement biorenouvelable et/ou biodégradable ou (ii) une couche de résine polaire azotée ou oxygénée telle qu'une couche de résine choisie parmi les polyamides, les copolyamides, les copolymères saponifiés d'acétate de vinyle et d'éthylène (abrégé EVOH), les polyesters et copolyesters de nature renouvelable et/ou biodegradable ou leurs mélanges ou (iii) une couche métallique.

14. Structure multicouche selon la revendication 12 ou 13, **caractérisée en ce que** la couche (X) est une couche de polymères ou copolymères de l'acide lactique.

15. Emballage comprenant une des structures selon l'une quelconque des revendications précédentes.

## Claims

1. Multilayer structure comprising at least a layer (L) of a composition (the total making 100%):
- 1 to 99% by weight of a polymer (A) or of a blend of polymers (A), said polymer or polymers (A) being:
• biorenewable and/or biodegradable; and
• grafted by a functional grafting monomer comprising at least one reactive function, the grafting ratio being < 0.98% by weight of grafted polymer(s) (A);
- 99 to 1 % by weight of a polymer (B) or of a blend of polymers (B), said polymer or polymers (B) being:
• ungrafted;
• biorenewable and/or biodegradable; and
• identical to said polymer(s) (A) or compatible with said polymer(s) (A);
- 0 to 50% by weight of a component (C) being used to soften said composition; 0 to 50% by weight of a material (D) comprising starch.

2. Multilayer structure according to Claim 1, **characterized in that** the grafting ratio of the polymer (A) is between 0,1 and 0,9% by weight of grafted polymer (A).

3. Multilayer structure according to Claim 1 or 2, **characterized in that** the polymer (A) is chosen from polylactides, preferably from polymers and copolymers of lactic acid (PLA) and polymers and copolymers of glycolic acid (PGA).

4. Multilayer structure according to Claim 1 or 2, **characterized in that** the polymer (A) is chosen from polyhydroxyalkanoate homopolymers or copolymers or PHA, polyalkylene succinates or PAS, polybutylene succinate adipate or PBSA, polybutylene adipate terephthalate or PBAT, polycaprolactone or PCL, polytrimethylene terephthalate or PTT and thermoplastic starch or TPS.

5. Multilayer structure according to Claim 1 or 2, **characterized in that** the polymer (A) is chosen from polyethylene succinate or PES, polybutylene succinate or PBS, polyhydroxybutyrate or PHB, hydroxybutyrate/valerate copolymers or PHBV, such as poly(3-hydroxybutyrate)-poly(3-hydroxyvalerate), hydroxybutyrate/hexanoate copolymers or PHBHx and hydroxybutyrate/hexanoate copolymers or PHBO.

6. Multilayer structure according to one of the preceding claims, **characterized in that** the functional grafting monomer is chosen from unsaturated carboxylic acids or their functional derivatives.

7. Multilayer structure according to Claim 6, **characterized in that** the functional grafting monomer is chosen from (i) acrylic, methacrylic, maleic, fumaric and itaconic acids and (ii) anhydrides, ester derivatives, amide derivatives, imide derivatives and metal salts of said acids.

8. Multilayer structure according to Claim 7, **characterized in that** the functional grafting monomer is maleic anhydride.

9. Multilayer structure according to one of the preceding claims, **characterized in that** the polymer (B) is chosen from polylactides, preferably from polymers and copolymers of lactic acid (PLA) and polymers and copolymers of glycolic acid (PGA).

10. Multilayer structure according to Claim 9, **characterized in that** the component (C) is chosen from:
• polyethers, advantageously polyethylene glycol (abbreviated to PEG) or polytrimethylene ether glycol (abbreviated to PO3G);
• core-shell type compounds;
• copolymers or blends of copolymers of ethylene, unsaturated carboxylic acid ester and optionally other unsaturated functional monomers such as maleic anhydride (MAH), glycidyl methacrylate (GMA) or (meth)acrylic acid;
• copolymers or blends of copolymers of ethylene and α-olefins grafted with a functional monomer comprising at least one reactive function, the α-olefins having 3 to 30 carbon atoms.

11. Multilayer structure according to one of the preceding claims, **characterized in that** it comprises thermoplastic starch as material (D).

12. Multilayer structure according to one of the preceding claims, of which the layer (L) directly linked to a layer (X) is also directly linked to a layer (Y) and that forms a layer (X)/layer (L)/layer (Y) type structure:
• either the layer (X) and/or the layer (Y) being partially or completely biorenewable and/or biodegradable;
• either the layer (X) and/or the layer (Y) not being biorenewable and/or biodegradable (for example, a polyethylene layer);
• either the layer (X) being partially or completely biorenewable and/or biodegradable and the layer (Y) not being biorenewable and/or biodegradable;
• either the layer (Y) being partially or completely biorenewable and/or biodegradable and the layer (X) not being biorenewable and/or biodegradable.

13. Multilayer structure according to Claim 12, the layer (Y), of different nature from the layer (X), advantageously being (i) a layer of a biorenewable and/or biodegradable polymer or of a blend of partially or completely biorenewable and/or biodegradable polymers or (ii) a layer of nitrogen-containing or oxygen-containing polar resin such as a layer of resin chosen from polyamides, copolyamides, saponified vinyl acetate/ethylene copolymers (abbreviated to EVOH), polyesters and copolyesters of renewable and/or biodegradable nature or mixtures thereof or (iii) a metal layer.

14. Multilayer structure according to Claim 12 or 13, **characterized in that** the layer (X) is a layer of polymers or copolymers of lactic acid.

15. Packaging comprising one of the structures according to one of the preceding claims.

## Patentansprüche

1. Mehrschichtstruktur, umfassend mindestens eine Schicht (L) aus einer Zusammensetzung, umfassend (wobei sich die Summe auf 100% beläuft):
- 1 bis 99 Gew.-% eines Polymers (A) oder einer Mischung von Polymeren (A), wobei das Polymer (A) bzw. die Polymere (A)
• biologisch erneuerbar und/oder biologisch abbaubar sind und
• mit einem funktionellen Pfropfmonomer mit mindestens einer reaktiven Funktion gepfropft sind, wobei der Pfropfgehalt < 0,98 Gew.-%, bezogen auf gepfropftes Polymer (A) bzw. gepfropfte Polymere (A), ist;
- 99 bis 1 Gew.-% eines Polymers (B) oder einer Mischung von Polymeren (B), wobei das Polymer (B) bzw. die Polymere (B)
• ungepfropft sind;
• biologisch erneuerbar und/oder biologisch abbaubar sind und
• mit dem Polymer (A) bzw. den Polymeren (A) identisch oder mit dem Polymer (A) bzw. den Polymeren (A) verträglich sind;
- 0 bis 50 Gew.-% einer Komponente (C), die zum Weichmachen der Zusammensetzung dient;
- 0 bis 50 Gew.-% eines stärkehaltigen Materials (D).

2. Mehrschichtstruktur nach Anspruch 1, **dadurch gekennzeichnet, dass** der Pfropfgehalt des Polymers (A) zwischen 0,1 und 0,9 Gew.-%, bezogen auf das gepfropfte Polymer (A), liegt.

3. Mehrschichtstruktur nach Anspruch 1 oder 2, **dadurch gekennzeichnet, dass** das Polymer (A) aus Polylactiden, vorzugsweise aus Polymeren und Copolymeren von Milchsäure (PLA) und Polymeren und Copolymeren von Glykolsäure (PGA), ausgewählt ist.

4. Mehrschichtstruktur nach Anspruch 1 oder 2, **dadurch gekennzeichnet, dass** das Polymer (A) aus Poly(hydroxyalkanoat)-Homopolymeren oder -Copolymeren oder PHA, Poly(alkylen)succinaten oder PAS, Poly(butylen)succinatadipat oder PBSA, Poly-(butylen)adipatterephthalat oder PBAT, Poly(caprolacton) oder PCL, Poly(trimethylenterephthalat) oder PTT und thermoplastischer Stärke oder TPS ausgewählt ist.

5. Mehrschichtstruktur nach Anspruch 1 oder 2, **dadurch gekennzeichnet, dass** das Polymer (A) aus Polyethylensuccinat oder PES, Polybutylensuccinat oder PBS, Poly(hydroxybutyrat) oder PHB, Hydroxybutyratvalerat-Copolymeren oder PHBV wie Poly(3-hydroxybutyrat)-poly(3-hydroxyvalerat), Hydroxybutyrathexanoat-Copolymere oder PHBHx und Hydroxybutyratoctanoat-Copolymeren oder PHBO ausgewählt ist.

6. Mehrschichtstruktur nach einem der vorhergehenden Ansprüche, **dadurch gekennzeichnet, dass** das funktionelle Pfropfmonomer aus ungesättigten Carbonsäuren oder funktionellen Derivaten davon ausgewählt ist.

7. Mehrschichtstruktur nach Anspruch 6, **dadurch gekennzeichnet, dass** das funktionelle Pfropfmonomer aus (i) Acrylsäure, Methacrylsäure, Maleinsäure, Fumarsäure und Itaconsäure und (ii) Anhydriden, Esterderivaten, Amidderivaten, Imidderivaten und Metallsalzen dieser Säuren ausgewählt ist.

8. Mehrschichtstruktur nach Anspruch 7, **dadurch gekennzeichnet, dass** es sich bei dem funktionellen Pfropfmonomer um Maleinsäureanhydrid handelt.

9. Mehrschichtstruktur nach einem der vorhergehenden Ansprüche, **dadurch gekennzeichnet, dass** das Polymer (B) aus Polylactiden, vorzugsweise aus Polymeren und Copolymeren von Milchsäure (PLA) und Polymeren und Copolymeren von Glykolsäure (PGA), ausgewählt ist.

10. Mehrschichtstruktur nach Anspruch 9, **dadurch gekennzeichnet, dass** die Komponente (C) aus
• Polyethern, vorteilhafterweise Polyethylenglykol (abgekürzt PEG) oder Polytrimethylenetherglykol (abgekürzt PO3G);
• Verbindungen vom Kern-Schale-Typ;
• Copolymeren oder Mischungen von Copolymeren von Ethylen, ungesättigtem Carbonsäureester und gegebenenfalls anderen ungesättigten funktionellen Monomeren wie Maleinsäureanhydrid (MAH), Glycidylmethacrylat (GMA), (Meth)acrylsäure;
• Copolymeren oder Mischungen von Copolymeren von Ethylen und alpha-Olefin, die mit einem funktionellen Monomer mit mindestens einer reaktiven Funktion gepfropft sind, wobei die alpha-Olefine 3 bis 30 Kohlenstoffatome aufweisen;
ausgewählt ist.

11. Mehrschichtstruktur nach einem der vorhergehenden Ansprüche, **dadurch gekennzeichnet, dass** sie als Material (D) thermoplastische Stärke umfasst.

12. Mehrschichtstruktur nach einem der vorhergehenden Ansprüche, **dadurch gekennzeichnet, dass** die direkt an eine Schicht (X) gebundende Schicht (L) auch direkt an eine Schicht (Y) gebunden ist und eine Struktur vom Typ Schicht (X)/Schicht (L)/Schicht (Y) bildet, wobei:
• entweder die Schicht (X) und/oder die Schicht (Y) teilweise oder vollständig biologisch erneuerbar und/oder biologisch abbaubar ist bzw. sind;
• oder die Schicht (X) und/oder die Schicht (Y) nicht biologisch erneuerbar und/oder biologisch abbaubar ist bzw. sind (beispielsweise eine Schicht aus Polyethylen);
• oder die Schicht (X) teilweise oder vollständig biologisch erneuerbar und/oder biologisch abbaubar ist und die Schicht (Y) nicht biologisch erneuerbar und/oder biologisch abbaubar ist;
• oder die Schicht (Y) teilweise oder vollständig biologisch erneuerbar und/oder biologisch abbaubar ist und die Schicht (X) nicht biologisch erneuerbar und/oder biologisch abbaubar ist.

13. Mehrschichtstruktur nach Anspruch 12, wobei es sich bei der Schicht (Y), die eine von der Schicht (X) verschiedene Beschaffenheit aufweist, vorteilhafterweise um (i) eine Schicht aus einem biologisch erneuerbaren und/oder biologisch abbaubaren Polymer oder einer Mischung von teilweise oder vollständig biologisch erneuerbaren und/oder biologisch abbaubaren Polymeren oder (ii) eine Schicht aus einem stickstoff- oder sauerstoffhaltigen polaren Harz wie eine Schicht aus Harz, das aus Polyamiden, Copolyamiden, verseiften Copolymeren von Vinylacetat und Ethylen (abgekürzt EVOH), Polyestern und Copolyestern erneurbarer oder biologisch abbaubarer Natur oder Mischungen davon ausgewählt ist, oder (iii) eine Metallschicht handelt.

14. Mehrschichtstruktur nach Anspruch 12 oder 13, **dadurch gekennzeichnet, dass** es sich bei der Schicht (X) um eine Schicht aus Polymeren oder Copolymeren von Milchsäure handelt.

15. Verpackung, umfassend eine der Strukturen nach einem der vorhergehenden Ansprüche.
